# EUROPEAN PATENT APPLICATION

(11) **EP 4 512 571 A1**
(43) Date of publication of application: **26.02.2025**
(21) Application number: 22928757.8
(22) Date of filing: 28.02.2022
(51) Int. Cl.: B23K 35/363

(54) **FLUX AND SOLDERING METHOD**

(71) Applicant: Ishikawa Metal Co., Ltd., Sakai-shi, Osaka 592-8352 (JP)
(72) Inventor: OZAKI Hirokazu, Sakai-shi, Osaka 592-8352 (JP); GOTO Shogo, Sakai-shi, Osaka 592-8352 (JP)
(74) Representative: Grünecker Patent- und Rechtsanwälte PartG mbB
(86) International application number: PCT/JP2022/008316
(87) International publication number: WO 2023/162231

(57) **Abstract**

There was no flux that enables soldering of an enameled aluminum wire to a connection target without peeling of the enamel.

A flux containing a rosin ester, a rosin other than the rosin ester, at least one type of a diethylene glycol monophenyl ether and a propylene glycol monophenyl ether as a solvent, and an organic hydrofluoric acid salt (as an activator) can wet an enameled aluminum wire with a solder without peeling of the enamel, and can solder the enameled aluminum wire to a connection target.

## Description

### Technical Field

The present invention relates to a flux or the like used at the time of soldering. In particular, the present invention provides a flux and a soldering method that enable soldering of an enameled aluminum wire without peeling of the enamel and also provides electric and electronic components soldered using the flux.

### Background Art

An enameled coil wire (hereinafter, also referred to as an "enamel wire") is a conductor wire obtained by coating the periphery of a conductor wire with a resin such as polyurethane to prevent conduction between wires even if the wires come into contact with each other. The coating thickness is very thin, and a short circuit is not caused even if the wires come into contact with each other when being wound into a coil. Further, the volume of the wound coil is not bulky. Therefore, an enamel wire can be suitably used for a coil and is also referred to as a magnet wire.

At a basic level, connection of an enamel wire is made by peeling the enamel on the surface and thereafter performing common soldering. A flux used in this operation is a commonly-used flux. This flux includes a rosin mainly consisting of abietic acid, a solvent that dissolves the rosin and is mainly composed of isopropyl alcohol, an activator, and other additives.

An enamel wire includes one using copper for a conductor wire (hereinafter, also referred to as an "enamel copper wire") and one also using aluminum for a conductor wire (hereinafter, also referred to as an "enamel aluminum wire"). Since an enamel aluminum wire including an aluminum conductor wire has a specific gravity lighter than copper, a coil thereof can be light even when the number of turns of the coil is large. In addition, since inexpensive aluminum is used in an enamel aluminum wire, the product price can be reduced.

PTL 1 (Japanese Patent No. 6177383) discloses a method of peeling enamel by ultrasonic vibration and performing soldering.

PTL 2 (Japanese Patent Application Laid-Open No. 2002-059293) discloses, as a flux for aluminum soldering, a mixture of fluorinated metal salts in an amount of 3.0 to 5.0% by mass, metal salts of organic acid in an amount of 10.0 to 30.0% by mass, and hydrofluoric acid salts of amino alcohol as the remainder.

### Citation List

### Patent Literature

PTL 1: Japanese Patent No. 6177383
PTL 2: Japanese Patent Application Laid-Open No. 2002-059293

### Summary of Invention

### Technical Problem

In an enamel copper wire, wettability of a solder for copper is very high, and the copper wire and the solder can be wetted by using only the molten solder and a common flux. In other words, soldering is possible without peeling of the enamel. However, in the case of an enamel aluminum wire, it was impossible to sufficiently wet the solder and aluminum conductor wire even if the molten solder dissolved enamel on the surface. In addition, a flux for an aluminum conductor wire could not peel enamel, and it was impossible to wet an enamel aluminum wire and a solder by only the molten solder and a known flux.

### Solution to Problem

The present invention has been conceived in view of the above-described problem and provides a flux that can wet a solder and an enamel aluminum wire without the necessity of peeling enamel.

More specifically, the flux according to the present invention includes a rosin having good compatibility with enamel, specifically a rosin ester.

The flux further includes 30 to 75% by mass of a glycol-based solvent having a phenyl group, specifically at least one type of a diethylene glycol monophenyl ether and a propylene glycol monophenyl ether, and an organic hydrofluoric acid salt.

### Advantageous Effects of Invention

In the flux according to the present invention, the rosin ester and the glycol-based solvent having a phenyl group can melt enamel, and the activator can melt a surface oxide film of a conductor wire. Therefore, soldering can be achieved with only heat of the solder without peeling of the enamel of an enamel wire. In particular, soldering is possible even when the conductor wire is an aluminum wire, and soldering can be suitably performed even for a lightweight enameled aluminum wire (enamel aluminum wire).

### Brief Description of Drawings

[Fig.1] Fig.1 is a view illustrating an appearance of a connection planned object used in an experiment.
[Fig. 2] Fig. 2 is a view for explaining experiment steps.

### Description of Embodiments

Hereinafter, a flux according to the present invention will be described with reference to the drawings and embodiments. Note that the following description illustrates one embodiment and one example of the present invention, and the present invention is not limited to the following description. The following description can be modified without departing from the spirit of the present invention. Further, "to" between objects means inclusively greater than the first value and inclusively less than the second value. For example, "A to B" means a value range including the value A, values larger than A (A or more) but smaller than B, and the value B (B or less).

### <Rosin>

The flux according to the present invention includes a rosin, a solvent, and an activator. As the rosin, a rosin ester and a rosin other than rosin esters are preferably used in combination. The rosin ester is a rosin having a hydroxyl value, and whether or not the rosin ester is contained in the flux can be detected by FT-IR (Fourier Transform Infrared Spectroscopy) or GPC (Gel Permeation Chromatography).

The content ratio of the rosin is 20% by mass to 55% by mass with respect to the whole of the flux. The content ratio of the rosin ester, which is included in the rosin, is suitably 5% by mass or more and 45% by mass or less relative to the total amount of the flux. When the content of the rosin ester is excessively low, an enameled aluminum wire (enamel aluminum wire) cannot be wetted. When the content of the rosin ester is excessively high, the viscosity thereof becomes excessively high, and thus use as a flux is impossible.

Suitable examples of rosin other than rosin esters include a rosin made of abietic acid, a hydrogenated rosin, a polymerized rosin, and an acryl-modified rosin. Rosin other than rosin esters is desirably contained in an amount of at least 10% by mass relative to the total amount of the flux.

### <Solvent>

The solvent preferably has a boiling point of lower than 400°C and serves as a good solvent for the resin. Here, 400°C is a typical soldering operation temperature of a lead-free solder. The boiling point of the solvent is preferably 220°C or higher. 220°C is the melting point of a lead-free solder. This temperature is set because, if the solvent evaporates before the lead-free solder dissolves, the effect of wetting the solder and the conductor wire is reduced. That is, as long as the adopted solvent is a good solvent for the resin having a boiling point equal to or higher than the melting point of the lead-free solder and lower than the operation temperature, it can be used as a solvent of the flux according to the present invention.

Specifically, a glycol-based solvent containing a phenyl group is preferable. More specifically, a diethylene glycol monophenyl ether or a propylene glycol monophenyl ether is preferable.

Further, as an auxiliary agent for the function of removing enamels, N-methyl-2-pyrrolidone, 3 methyl phenol, trichloromethane, hexafluoro-2-propanol, 2-chlorophenol, or the like, which are good solvents for enamels, may be added.

The amount of the solvent may be 25 to 75% by mass relative to the total amount of the flux. If it is less than the lower limit, the rosin does not dissolve sufficiently, and there arises a problem that the flux crystallizes during storage or operation.

### <Activator>

The activator removes the metal oxide film from the surface of the conductor wire that has been exposed by the dissolution of the enamel, making the solder easily wettable. In particular, when the conductor wire is of aluminum, an activator that can remove strong oxide films, that acts only at a high temperature at the time of soldering, and that does not act at room temperature is desirable. Among these, a hydrofluoric acid salt of an organic amine can be suitably used.

Specifically, hydrofluoric acid salts of amines are preferable. Specifically, hydrofluoric acid salts of cyclohexylamine, 1,3-diphenylguanidine, N,N'-diethylaniline, diethylamine and the like can be used.

When a hydrochloric acid salt or a hydrobromic acid salt of an amine is used without using a hydrofluoric acid salt of amine, the oxide film removal ability is weak. Thus, the removal of oxide film from the aluminum surface by the activator cannot be completed, and neither can the soldering.

Further, when using a hydrofluoric acid, which is an inorganic acid or a sodium fluoride salt other than an amine, not only at a high temperature at the time of soldering, but also at room temperature after the soldering is completed, the activator exhibits an oxide film removing ability. Such oxide film removal generates corrosion at the soldering location and fractures associated with the corrosion.

The hydrofluoric acid salt of the amine may be used singly or in a mixture of a plurality of types. The activator is added in an amount of 1.2 to 5.0% by mass relative to the total amount of the flux. The activator in an amount less than 1.2% by mass results in poor solderability. The activator in an amount exceeding the above-mentioned addition amount makes a large amount of fluorine remain in the flux residue, causing a possibility that a problem of corrosion and impairment of electrical reliability at the soldered portion arises.

### <Auxiliary activator>

Furthermore, organic bromides that generate hydrobromic acid at soldering temperatures as an auxiliary activator can be suitably used for the flux of the present invention, and examples that can be favorably used include 2,3-dibromo-1-propanol, 1,2,5,6,9,10-hexabromocyclododecane, tris(2,3-dibromopropyl)isocyanurate, and 2,2-bis(4 bromomethyl)-1,3-propanediol.

Even after removing the oxide film on the aluminum wire surface with an amine hydrofluoric acid salt, these auxiliary activators exert and maintain a moderate oxide removing action to prevent re-oxidation of aluminum. Thus, the auxiliary activators can ensure good solderability.

The amount of the auxiliary activator is preferably 0.5 to 5% by mass relative to the total amount of the flux. If the amount is less than the above-mentioned addition amount, the oxide removing action cannot be obtained. The auxiliary activator in an amount exceeding the above-mentioned addition amount makes a large amount of halogen remain in the flux residue, causing a possibility that a problem of corrosion and impairment of electrical reliability at the soldered portion arises.

Next, a soldering method using the flux according to the present invention will be described. Since the flux according to the present invention includes a rosin, it has an appropriate viscosity. Therefore, soldering can be performed by immersing in the flux a contact portion, which is in a state of contact between an enamel wire and a connection target, such that the flux is attached thereto, and thereafter immersing the resultant product in a molten solder. After these steps, a step of washing the soldered connection product may be performed.

Note that wax, a gelator, or the like may be added similarly to a common liquid flux or pasty flux, in order to adjust the viscosity and thixotropic properties of the flux for the purpose of controlling the amount of the flux attached to the contact portion.

Here, the connection target is an electrically conductive metal. The connection target is a material usually used as a conductor wire or a terminal material in an electrical circuit and an electrical circuit, such as copper, iron, aluminum, gold, silver, and alloys thereof. The enamel wire may be not only an enamel copper wire but also an enamel aluminum wire. Bringing the enamel wire and the connection target into contact with each other means that the enamel wire and the connection target are at least partly in contact with each other. Further, if the connection target and the enamel wire are in extreme proximity to each other, they do not need to be in contact with each other.

The flux according to the present invention can wet even the enamel aluminum wire together with a solder. Therefore, when the connection target and the enamel wire are in extreme proximity with each other, the connection target and the enamel wire can be electrically connected by a solder. Such a distance is about 0.1 mm. That is, in the present invention, contact-fixing the enamel wire and the connection target includes not only both being actually in contact with each other but also bringing the enamel wire and the connection target into close proximity to each other. The result of the enamel wire and the connection target being contact-fixed is referred to as a "connection planned object".

Next, the connection planned object is immersed in the flux according to the present invention. Here, in the connection planned object, only a portion where the connection target and the enamel wire are contact-fixed has to be immersed in the flux. In other words, of the enamel wire and the connection target, a portion that one wants to solder is immersed in the flux.

Then, the connection planned object attached with the flux is immersed in a molten solder. When immersing in a molten solder, it is acceptable for the flux to be not dried. That is, the connection planned object may be immersed in a molten solder immediately after having been immersed in the flux.

In the step of immersing in a molten solder, the connection planned object attached with the flux may be not held for a while in a molten solder, and may be raised immediately after the entirety of the portion attached with the flux has been immersed in a molten solder.

The immersion in the flux and the immersion in a molten solder may be performed not only once but also multiple times. That is, one set of operations includes the connection planned object being immersed in the flux and thereafter being immersed in a molten solder, and this set may be performed multiple times. However, the flux according to the present invention enables the connection planned object including the enamel wire and the connection target to be soldered by only one set of immersing the connection planned object in the flux and thereafter immersing in a molten solder. The soldered connection planned object is referred to as a "connection completed object".

The connecting method using the flux according to the present invention requires the action of immersing in a solder the connection planned object attached with the flux. That is, the action of the connection planned object passing the interface between the solder and the flux on the surface causes enamel to be peeled while wetting the connection target and the solder.

After the immersion in a molten solder, the connection completed object may be washed. Since the flux according to the present invention includes components having a boiling point of 400°C or lower, all the components evaporate when immersed in a molten solder. However, if components constituting the flux remain, washing may be performed in order to prevent corrosion of the connection target or the connection completed object.

Note that the connecting method using the flux according to the present invention can be suitably utilized for connection between an enamel wire and an electrical component or an electronic component. That is, the connection target can be an electrical component and an electronic component that include an enamel wire. In particular, the connecting method can be suitably used for connection between a terminal and an enamel wire in components that are prepared by winding an enamel wire, examples of such components being a rotor, stator, and inductor of an electromagnet and a motor. Examples

The following experiments were conducted in order to confirm the effects of the flux according to the present invention.

### <Soldering property test>

An enameled aluminum coil wire was wound around a wiring terminal (0.64 × 0.64 × 20 mm, tin plating on nickel) and thereafter coated with a testing flux. The resultant product was immersed in a molten solder (solder temperature: 400°C, solder composition: tin 96.1-silver 3.5-nickel 0.4% by mass) in a solder tank.

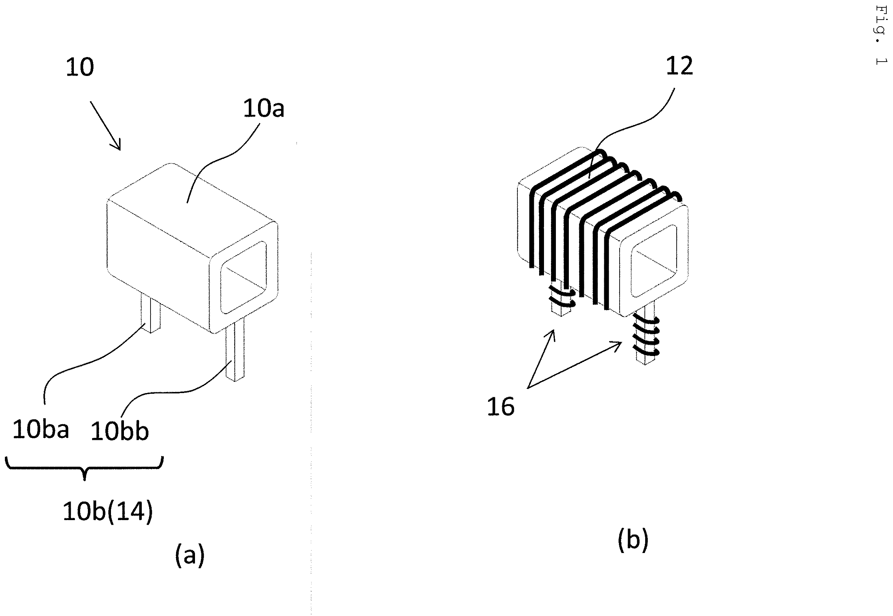

The appearance of the used sample is illustrated in Fig. 1. Fig. 1(a) illustrates a rotor 10 of a motor. The rotor 10 has a configuration in which a main body 10a formed of a tubular insulating material is mounted with a wiring terminal 10b at two locations (10ba and 10bb). With reference to Fig. 1(b), an enamel aluminum wire 12 was wound, starting from the wiring terminal 10ba, around the rotor 10. The enamel aluminum wire 12 was also wound around the main body 10a to the wiring terminal 10bb. Here, the wiring terminal 10b is a connection target 14, and the wiring terminal 10b around which the enamel aluminum wire 12 was wound is a connection planned object 16.

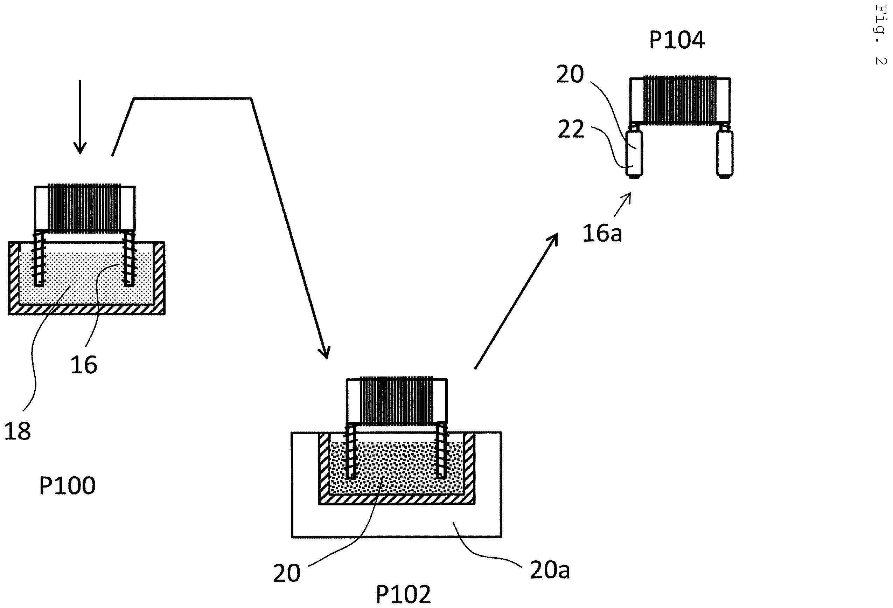

Next, Fig. 2 is referred to. First, the connection planned object 16 was immersed in a testing flux 18 (P100). Thereafter, the connection planned object 16 was immersed in a molten solder 20 prepared in a solder tank 20a (P102). The connection planned object 16 was raised from the molten solder 20 (P104). When the flux 18 according to the present invention was used, a portion where the solder was not wetted did not occur, the solder was completely wetted, and a connection completed object 16a could be obtained, at the portion of the connection planned object 16 that is the wiring terminal 10b contact-fixed with the enamel aluminum wire 12, by one set of the above-describe operations (one step of immersion in the flux 18 and immersion in the solder 20).

The soldering portion of the connection completed object 16a was visually evaluated as follows: "@" (which means excellently acceptable) when the solder is sufficiently wet for the wiring terminal 10b and the enamel aluminum wire 12 so that both are integrated; "○" (which means acceptable) when wettability is slightly inferior but is at a level of being sufficiently usable as a product; and "×" (which means unacceptable) when wettability is insufficient and is at a level of being unusable as a product.

Further, an experiment of applying the flux onto an aluminum plate not coated with enamel and immersing the resultant product in a molten solder was also performed at the same time.

The composition of the testing flux is described below.

### (Example 1)

A flux of Example 1 was prepared by mixing the following materials:
20.0% by mass of purified rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-359 (also represented as "PCKE-359") was used. PCKE-359 is a rosin derivative (rosin ester) manufactured by Arakawa Chemical Industries, Ltd. PhDG is a diethylene glycol monophenyl ether, CHAH is a cyclohexylamine hydrofluoric acid salt, and TAIC6B represents tris(2,3-dibromopropyl)isocyanurate.

### (Example 2)

A flux of Example 2 was prepared by mixing the following materials:
20.0% by mass of purified rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-100 (also represented as "PCKE-100") was used. PCKE-100 is a rosin derivative (rosin ester) manufactured by Arakawa Chemical Industries, Ltd.

### (Example 3)

A flux of Example 3 was prepared by mixing the following materials:
20.0% by mass of polymerized rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-359 (PCKE-359) was used.

### (Example 4)

A flux of Example 4 was prepared by mixing the following materials:
20.0% by mass of purified rosin and 25.0% by mass of rosin ester as the rosin,
51.7% by mass of PhFG as the solvent,
2.3% by mass of CHAH as the activator, and
1.0% by mass of TAIC6B as the auxiliary activator.

Note that, as the rosin ester, Pine Crystal KE-359 (PCKE-359) was used. PhFG is a propylene glycol monophenyl ether.

### (Example 5)

A flux of Example 5 was prepared by mixing the following materials:
20.0% by mass of purified rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-311 (also represented as "PCKE-311") was used. PCKE-311 is a rosin derivative (rosin ester) manufactured by Arakawa Chemical Industries, Ltd.

### (Example 6)

A flux of Example 6 was prepared by mixing the following materials:
20.0% by mass of purified rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal D-6011 (also represented as "PCD-6011") was used. PCD-6011 is a rosin derivative (rosin ester) manufactured by Arakawa Chemical Industries, Ltd.

### (Example 7)

A flux of Example 7 was prepared by mixing the following materials:
20.0% by mass of purified rosin and 25.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Ester Gum 105 (also represented as "EG105") was used. EG105 is a rosin derivative (rosin ester) manufactured by Arakawa Chemical Industries, Ltd.

### (Example 8)

A flux of Example 8 was prepared by mixing the following materials:
40.0% by mass of purified rosin and 5.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-359 (PCKE-359) was used.

### (Example 9)

A flux of Example 9 was prepared by mixing the following materials:
10.0% by mass of purified rosin and 45.0% by mass of rosin ester as the rosin,
41.7% by mass of PhDG as the solvent,
2.3% by mass of CHAH as the activator, and
1.0% by mass of TAIC6B as the auxiliary activator.

Note that, as the rosin ester, Pine Crystal KE-359 (PCKE-359) was used.

### (Comparative Example 1)

A flux of Comparative Example 1 was prepared by mixing the following materials:
45.0% by mass of purified rosin as the rosin,
51.7% by mass of PhDG as the solvent,
2.3% by mass of CHAH as the activator, and
1.0% by mass of TAIC6B as the auxiliary activator.

Note that Comparative Example 1 does not contain a rosin ester.

### (Comparative Example 2)

A flux of Comparative Example 2 was prepared by mixing the following materials:
20.0% by mass of purified rosin and 25.0% by mass of rosin ester as the rosin,
51.7% by mass of IPA as the solvent,
2.3% by mass of CHAH as the activator, and
1.0% by mass of TAIC6B as the auxiliary activator.

Note that, as the rosin ester, Pine Crystal KE-359 (PCKE-359) was used. IPA is isopropyl alcohol.

### (Comparative Example 3)

A flux of Comparative Example 3 was prepared by mixing the following materials:
20.0% by mass of purified rosin and 25.0% by mass of rosin ester as the rosin,
51.7% by mass of BZA as the solvent,
2.3% by mass of CHAH as the activator, and
1.0% by mass of TAIC6B as the auxiliary activator.

Note that, as the rosin ester, Pine Crystal KE-359 (PCKE-359) was used. BZA is benzyl alcohol.

### (Comparative Example 4)

A flux of Comparative Example 4 was prepared by mixing the following materials:
44.0% by mass of purified rosin and 1.0% by mass of rosin ester as the rosin,
51.7% by mass of PhDG as the solvent,
2.3% by mass of CHAH as the activator, and
1.0% by mass of TAIC6B as the auxiliary activator.

Note that, as the rosin ester, Pine Crystal KE-359 (PCKE-359) was used.

### (Comparative Example 5)

A flux of Comparative Example 5 was prepared by mixing the following materials:
45.0% by mass of rosin ester as the rosin,
51.7% by mass of PhDG as the solvent,
2.3% by mass of CHAH as the activator, and
1.0% by mass of TAIC6B as the auxiliary activator. Note that Comparative Example 5 does not contain a rosin other than the rosin ester.

Note that, as the rosin ester, Pine Crystal KE-359 (PCKE-359) was used. Further, the rosin of Comparative Example 5 is composed only of the rosin ester.

Table 1 shows the composition and experimental result evaluation of a sample of each Example. Table 2 shows the composition and experimental result evaluation of a sample of each Comparative Example. In the tables, Example may be represented as "Ex", and Comparative Example may be represented as "CEx".

**[Table 1]**

| A numerical value of each example is in % by mass. | | | | | | | | | | |
|---|---|---|---|---|---|---|---|---|---|---|
| | | Example 1 | Example 2 | Example 3 | Example 4 | Example 5 | Example 6 | Example 7 | Example 8 | Example 9 |
| Rosin | Purified Rosin | 20.0 | 20.0 | - | 20.0 | 20.0 | 20.0 | 20.0 | 40.0 | 10.0 |
| | Polymerized Rosin | - | - | 20.0 | - | - | - | - | - | - |
| | Rosin Ester PCKE-359 | 25.0 | - | 25.0 | 25.0 | - | - | - | 5.0 | 45.0 |
| | Rosin Ester PCKE-100 | - | 25.0 | - | - | - | - | - | - | - |
| | Rosin Ester PCKE-311 | - | - | - | - | 25.0 | | - | - | - |
| | Rosin Ester PCD-6011 | - | - | - | - | - | 25.0 | - | - | - |
| | Rosin Ester EG105 | - | - | - | - | - | - | 25.0 | - | - |
| Solvent | PhDG | 51.7 | 51.7 | 51.7 | - | 51.7 | 51.7 | 51.7 | 51.7 | 41.7 |
| | PhFG | - | - | - | 51.7 | - | - | - | - | - |
| | IPA | - | - | - | - | - | - | - | - | - |
| | BZA | - | - | - | - | - | - | - | - | - |
| Activator | CHAH | 2.3 | 2.3 | 2.3 | 2.3 | 2.3 | 2.3 | 2.3 | 2.3 | 2.3 |
| Auxiliary Activator | TAIC6B | 1.0 | 1.0 | 1.0 | 1.0 | 1.0 | 1.0 | 1.0 | 1.0 | 1.0 |
| Wettability | Enameled Aluminum Coil Wire | ⊚ | ⊚ | ⊚ | ⊚ | ⊚ | ⊚ | ⊚ | ⊚ | ⊚ |
| | Enameled aluminum coil wire | ⊚ | ⊚ | ⊚ | ⊚ | ⊚ | ⊚ | ⊚ | ⊚ | ⊚ |

| | | | | | | | | | | |
|---|---|---|---|---|---|---|---|---|---|---|
| PhDG : Diethylene Glycol Monophenyl Ether PhFG : Propylene Glycol Monophenyl Ether IPA : Isopropyl Alcohol BZA : Benzyl Alcohol CHAH : Cyclohexylamine Hydrofluoric Acid Salt TAIC6B : Tris (2,3-Dibromopropyl) Isocyanurate | | | | | | | | | | |

**[Table 2]**

| | A numerical value of each example is in % by mass. | | | | | |
|---|---|---|---|---|---|---|
| | | Comparative Example 1 | Comparative Example 2 | Comparative Example 3 | Comparative Example 4 | Comparative Example 5 |
| Rosin | Purified Rosin | 45.0 | 20.0 | 20.0 | 44.0 | - |
| | Polymerized Rosin | - | - | - | - | - |
| | Rosin Ester PCKE-359 | - | 25.0 | 25.0 | 1.0 | 45.0 |
| | Rosin Ester PCKE-1.00 | - | - | - | - | |
| | Rosin Ester PCKE-311 | - | - | - | - | - |
| | Rosin Ester PCD-6011 | - | - | - | - | - |
| | Rosin Ester EG105 | - | - | - | - | - |
| Solvent | PhDG | - | - | - | 51.7 | 51.7 |
| | PhFG | 51.7 | - | - | - | - |
| | IPA | - | 51.7 | - | - | - |
| | BZA | - | - | 51.7 | - | - |
| Activator | CHAH | 2.3 | 2.3 | 2.3 | 2.3 | 2.3 |
| Auxiliary Activator | TAIC6B | 1.0 | 1.0 | 1.0 | 1.0 | 1.0 |
| Wettability | Enameled Aluminum Coil Wire | × | × | × | × | × |
| | Enameled aluminum coil wire | ⊚ | ⊚ | ⊚ | ⊚ | ⊚ |

| | | | | | | |
|---|---|---|---|---|---|---|
| PhDG : Diethylene Glycol Monophenyl Ether PhFG : Propylene Glycol Monophenyl Ether IPA : Isopropyl Alcohol BZA : Benzyl Alcohol CHAH : Cyclohexylamine Hydrofluoric Acid Salt TAIC6B : Tris (2,3-Dibromopropyl) Isocyanurate | | | | | | |

With reference to Comparative Example 1, the solder was wetted well for the uncoated aluminum plate but hardly wetted for the enamel aluminum wire (described as "enameled aluminum coil wire" in the table). That is, a cyclohexylamine hydrofluoric acid salt (CHAH) as the activator and tris(2,3-dibromopropyl)isocyanurate (TAIC6B) as the auxiliary activator wetted the solder well for aluminum, while purified rosin could not peel enamel and could not wet the solder well.

On the other hand, with reference to Example 1 and Example 2, the solder could be wetted well for not only the uncoated aluminum plate but also the enamel aluminum wire. That is, enamel could be peeled by rosin esters such as rosin ester Pine Crystal KE-359 and rosin ester Pine Crystal KE-100.

Further, with reference to Examples 3 and 5 to 7, enamel could be peeled, and the solder could be wetted well, even when rosins such as purified rosin and polymerized rosin were used as other rosin to be added, as long as rosin esters such as rosin ester Pine Crystal KE-359, rosin ester Pine Crystal KE-100, rosin ester Pine Crystal KE-311, rosin ester Pine Crystal D-6011, and rosin ester Ester Gum 105 were included.

Further, with reference to Comparative Example 2 and Comparative Example 3, the solvent having a boiling point lower than the melting point of lead-free solder, such as isopropyl alcohol (IPA: boiling point 82.4°C) or benzyl alcohol (BZA: boiling point 206°C) was instantly evaporated by the heating during soldering and evaporated before enamel was peeled. As a result, the enamel could not be peeled, and the solder could not be wetted well.

On the other hand, with reference to Example 1 and Example 4, enamel could be peeled, and the solder could be wetted well, with the glycol-based solvent containing a phenyl group such as a diethylene glycol monophenyl ether or a propylene glycol monophenyl ether (PhFG).

With reference to Example 8 and Example 9, the effects of the present invention could be exerted when the content of the rosin ester was 5% by mass or more and 45% by mass or less relative to the total amount of the flux. Even in such a case, the content of other rosin is desirably at least 10% by mass relative to the total amount of the flux (Example 9). Further, when the content of the rosin ester was less than 5% by mass relative to the total amount of the flux, the enameled aluminum coil wire could not be wetted (from comparison between Example 8 and Comparative Example 4).

Note that all Examples were evaluated as "O" (which means excellently acceptable) even for the enamel copper wire.

### Industrial Applicability

As described above, the flux according to the present invention can be suitably utilized in soldering for an enameled conductor wire without the necessity of peeling the enamel. Further, the type of the conductor wire may be either copper or aluminum.

### Reference Signs List

- 10: rotor

- 10a: main body
- 10b: wiring terminal
- 12: enamel aluminum wire
- 14: connection target
- 16: connection planned object
- 16a: connection completed object
- 18: flux
- 20: molten solder
- 20a: solder tank
- 22: portion where the solder is not wetted

## Claims

1. A flux comprising:
a rosin ester;
an other rosin other than the rosin ester;
at least one type of a diethylene glycol monophenyl ether and a propylene glycol monophenyl ether; and
an organic hydrofluoric acid salt (as an activator).

2. The flux according to claim 1, wherein the organic hydrofluoric acid salt is at least one or more types of a cyclohexylamine hydrofluoric acid salt, a 1,3-diphenylguanidine hydrofluoric acid salt, an N,N'-diethylaniline hydrofluoric acid salt, and a diethylamine hydrofluoric acid salt.

3. The flux according to claim 1 or 2, comprising, as an auxiliary activator, at least one type of 2,3-dibromo-1-propanol, 1,2,5,6,9,10-hexabromocyclododecane, tris(2,3-dibromopropyl)isocyanurate, and 2,2-bis(4 bromomethyl)-1,3-propanediol.

4. The flux according to any one of claims 1 to 3, wherein:
the rosin is contained in an amount of 20% by mass or more and 55% by mass or less relative to a total amount of the flux;
the rosin ester is contained in an amount of 5% by mass or more and 45% by mass or less relative to the total amount of the flux; and
the other rosin is contained in an amount of 10% by mass or more relative to the total amount of the flux.

5. A method for soldering an enamel wire, comprising the steps of:
contact-fixing an enamel wire and a connection target to form a connection planned object;
immersing the connection planned object to the flux according to any one of claims 1 to 3; and
immersing the connection planned object in a molten solder to form a connection product in which the enamel wire and the connection target are soldered.

6. The method for soldering an enamel wire according to claim 4, comprising a step of washing the connection product.
